# EUROPÄISCHE PATENTANMELDUNG

(11) **EP 1 297 920 A1**
(43) Veröffentlichungstag der Anmeldung: **02.04.2003**
(21) Anmeldenummer: 01123433.3
(22) Anmeldetag: 28.09.2001
(51) Int. Cl.: B22F 1/00

(54) **Hochaktive Bleistäube und Verfahren zu deren Behandlung**

(71) Anmelder: HOPPECKE Batterien GmbH & Co. KG., 59929 Brilon (DE)
(72) Erfinder: Erler Wolfgang, 09350 Lichtenstein (LI)
(74) Vertreter: Stenger, Watzke & Ring Patentanwälte

(57) **Zusammenfassung**

Der Vorliegenden Erfindung liegt die Aufgabe zugrunde, ein Verfahren zur Herstellung bzw. Behandlung von Bleistaub sowie Bleistaub bereitzustellen, mit welchen die Störungen infolge der Adhäsion der feinen Staubteilchen zueinander und zu Metallen und Plastwerkstoffen (Van der Waalsche Kräfte) reduziert oder vermieden werden. Zur technischen Lösung wird mit der Erfindung verfahrensseitig vorgeschlagen ein Verfharen zur Herstellung bzw. Behandlung hochaktiver Bleistäube, insbesondere für den Einsatz zur Herstellung von Batterien, wobei die Bleistäube mit oberflächenaktiven Stoffen versetz werden.

Als oberflächenaktive Stoffe werden vorzugsweise Abhömmlinge von Ethylen und Propylenoxiden, ein- und mehrwertige Alkohole, Sulfonate auf Glykolbasis, und/oder organische ein- und mehrwertige Amine verwendet. Diese Stoffe werden während des Mahlprozesses zugemischt.

## Beschreibung

Für die Herstellung von Batterien (Starter-, Industrie-, Traktionsbatterien) wird als wichtigster Stoff Bleistaub verwendet. Bei der Bleistaubverwendung setzt sich immer häufiger Mühlenstaub anstelle Bartonstaub durch.

Mühlenstaub ist gegenüber Bartonstaub wesentlich aktiver. Besonders aktiv ist Mühlenstaub sehr hoher Feinheit, d. h. Partikel sehr kleiner Korngrößen.

Die normale Korngrößenverteilung bei herkömmlich verwendetem Bleistaub liegt zwischen 0,1 und 5 µm (Mikrometer). Der Bartonstaub liegt im groben Bereich, der Mühlenstaub im feineren Bereich. Besonders hochaktiver Mühlenstaub liegt zwischen 0,1 und 1,5 µm. Bei mehr als 50 % Gewichtsanteilen kleiner 1,0 µm kommt es zu Agglomeratbildung des hochaktiven feinen Bleistaubes. Diese Eigenschaft der Agglomeratbildung und der damit verbundenen Haftneigung des Staubes an Metall- und Plaststoffen führt bei mechanischem und pneumatischem Transport des Staubes zu Verstopfungen der Transportsysteme (Rohrleitungen, Becherwerke, Förderschnecken, Waagen, Reaktionsbehälter und erschwertem Entladen von Transportsilowagen bis zur doppelten Zeit des Staubes als bei höheren Korngrößen).
Durch diese Adhäsionsneigung z. B. zu metallischen Behältern (Waagen, Reaktionsbehälter) kommt es zu Chargenfehldosierungen, Einwaagestörungen, Ungenauigkeit der Chargenzusammensetzung, das heißt allgemein zu Produktionsstörungen und Qualitätsmängeln.

Ausgehend vom beschriebenen Stand der Technik liegt der vorliegenden Erfindung die **Aufgabe** zugrunde, ein Verfahren zur Herstellung bzw. Behandlung von Bleistaub sowie Bleistaub bereitzustellen, mit welchem die Störungen infolge der Adhäsion der feinen Staubteilchen zueinander und zu Metallen und Plastwerkstoffen (Van der Vaalsche Kräfte) reduziert oder vermieden werden.

Zur technischen **Lösung** wird mit der Erfindung verfahrensseitig vorgeschlagen ein Verfahren zur Herstellung bzw. Behandlung hochaktiver Bleistäube, insbesondere für den Einsatz zur Herstellung von Batterien, wobei die Bleistäube mit oberflächenaktiven Stoffen versetzt werden.

Durch Zusatz von oberflächenaktiven Stoffen kann die Agglomeratbildung verhindert werden. Es hat sich überraschend herausgestellt, daß der Einsatz solcher oberflächenaktiver Stoffe insbesondere über Adsorptionsvorgänge an den Teilchenoberflächen diese Agglomeratbildung verhindert und dadurch die angegebenen Störungen verhindert.

Diese oberflächenaktiven Stoffe werden vorzugsweise dem Mahlprozeß zugegeben bzw. dem Bleistaub zugemischt.

Erfindungsgemäß werden die oberflächenaktiven Substanzen verdünnt in die Mahltrommeln der Bleistaubmühlen eingesprüht.

Oberflächenaktive Stoffe sind z. B. Abkömmlinge von Ethylen und Propylenoxiden, ein- und mehrwertige Alkohole, Sulfonate auf Glykolbasis, organische ein- und mehrwertige Amine. Bevorzugt eignen sich Triethanolamin und Triehylenglycol (auch besonders kostengünstig).

Die bevorzugte Konzentration bzw. Menge die dem Mahlgut (Bleistaub) zugesetzt wird liegt zwischen 100 und 300 g/t (Gramm pro Tonne).

Diese wässrigen Lösungen von oberflächenaktiven Stoffen werden bevorzugt als 10%ige Lösungen in die Mahltrommeln eingesprüht. Damit wird die Bildung von Agglomeraten verhindert und gleichzeitig die während der Reaktion des Bleis mit Luftsauerstoff (exotherme Reaktion) benötigte Kühlung der Mahltrommel gesichert. Das Wasser der Lösung verdampft und die oberflächenaktiven Stoffe schlagen sich auf der Oberfläche der feinen Bleistaubpartikel nieder.

Die Agglomeratbildung und alle daraus entstehenden Nachteile und Störungen werden damit verhindert.

## Patentansprüche

1. Verfahren zur Behandlung hochaktiver Bleistäube, insbesondere für den Einsatz zur Herstellung von Batterien, wobei die Bleistäube mit oberflächenaktiven Stoffen versetzt werden.

2. Verfahren nach Anspruch 1, **dadurch gekennzeichnet, daß** die oberflächenaktiven Stoffe während des Mahlprozesses zur Herstellung der Bleistäube zugemischt werden.

3. Verfahren nach einem der vorhergehenden Ansprüche, **dadurch gekennzeichnet, daß** die oberflächenaktiven Substanzen verdünnt in die Mahltrommeln der Bleistaubmühlen eingesprüht werden.

4. Verfahren nach einem der vorhergehenden Ansprüche, **dadurch gekennzeichnet, daß** als oberflächenaktive Stoffe vorzugsweise Abkömmlinge von Ethylen und Propylenoxiden, ein- und mehrwertige Alkohole, Sulfonate auf Glykolbasis, und/oder organische ein- und mehrwertige Amine verwendet werden.

5. Verfahren nach einem der vorhergehenden Ansprüche, **dadurch gekennzeichnet, daß** als oberflächenaktive Stoffe vorzugsweise Triethanolamin und/oder Triehylenglycol verwendet werden.

6. Verfahren nach einem der vorhergehenden Ansprüche, **dadurch gekennzeichnet, daß** oberflächenaktive Stoffe vorzugsweise in Mengen von zwischen 100 und 300 g/t beigemengt werden.

7. Verfahren nach einem der vorhergehenden Ansprüche, **dadurch gekennzeichnet, daß** wässrigen Lösungen von oberflächenaktiven Stoffen werden bevorzugt als 10%ige Lösungen in die Mahltrommeln eingesprüht werden.

8. Hochaktive Bleistäube, insbesondere für den Einsatz zur Herstellung von Batterien, **dadurch gekennzeichnet, daß** die Bleistäube mit oberflächenaktiven Stoffen versetzt sind.

9. Hochaktive Bleistäube nach Anspruch 8, **dadurch gekennzeichnet, daß** die oberflächenaktiven Stoffe vorzugsweise Abkömmlinge von Ethylen und Propylenoxiden, ein- und mehrwertige Alkohole, Sulfonate auf Glykolbasis, und/oder organische ein- und mehrwertige Amine sind.

10. Hochaktive Bleistäube nach einem der vorhergehenden Ansprüche 8 oder 9, **dadurch gekennzeichnet, daß** diese oberflächenaktive Stoffe vorzugsweise in Mengen von 100 und 300 g/t aufweisen.
